Europäisches Patentamt

European Patent Office

Office européen des brevets

(11) Publication number: **0 410 197 A1**

# EUROPEAN PATENT APPLICATION

(21) Application number: **90113098.9**

(22) Date of filing: **09.07.90**

(51) Int. Cl.5: **G01L 1/00**

(30) Priority: **28.07.89 IT 6764489**

(43) Date of publication of application:
**30.01.91 Bulletin 91/05**

(84) Designated Contracting States:
**AT DE ES FR GB IT NL SE**

(71) Applicant: **IVECO FIAT S.p.A.**
**Via Puglia 35**
**I-10156 Torino(IT)**

(72) Inventor: **Cortesi, Giorgio**
**Via Carducci, 15**
**I-25100 Brescia(IT)**
Inventor: **Lupo, Giorgio**
**Via Domodossola, 10**
**I-10040 Rivalta(IT)**

(74) Representative: **Jorio, Paolo et al**
**STUDIO TORTA Società Semplice Via Viotti 9**
**I-10121 Torino(IT)**

(54) Dynamometer, particularly for detecting the operating load of servo-controlled systems.

(57) A dynamometer, particularly for detecting the operating load in servo-controlled systems, having two bodies (2, 3) coupled together telescopically, the first (3) being adapted to be connected to a feed-back point and the second (2) being adapted to receive an axial force (10) to be measured. The two bodies (2, 3) are coupled together axially by a flat disc spring (27), one body supporting a magnet (42) and the other a Hall effect sensor (46) adapted to cooperate with the magnet (42) so as to transmit a signal proportional to the deformation of the spring (27) and thus to the extent of the force (10) applied.

# DYNAMOMETER, PARTICULARLY FOR DETECTING THE OPERATING LOAD OF SERVO-CONTROLLED SYSTEMS

The present invention relates to a dynamometer, particularly for detecting the operating load of servo-controlled systems.

The dynamometers normally used to measure these loads use complex transmissions which convert a force applied to the dynamometer into the movement of a potentiometer cursor. It is possible in this way to obtain an electrical signal (voltage) as a function of the position of the potentiometer cursor and thus of the intensity of the force applied.

The known types of transmission which are conventionally used are complex and not very reliable; in addition, the electrical contacts disposed within the potentiometer can be easily damaged by atmospheric agents or by corrosive substances.

Lastly, in particularly difficult operating conditions, for instance when there are unforeseen overloads, the known dynamometers described above may be subject to serious damage.

Dynamometers using piezoelectric or extensometric devices are also known; these can be easily damaged and are very costly.

The object of the present invention is to provide a dynamometer which can be advantageously, but not exclusively, used to measure the operating loads of servo-controlled systems, which dynamometer is free from the drawbacks described above.

In accordance with the present invention, a dynamometer, particularly for detecting the operating load of servo-controlled systems, is provided and comprises a first body adapted to be connected to a feedback point, a second body adapted to receive a force to be measured, elastic means interposed between the first and the second body, wherein the first and second bodies are coupled together so as to displace one another in the direction of the force and, under the action of this force, against the action of the elastic means, and indicator means adapted to transmit a signal as a function of the relative position of the two bodies, characterized in that the indicator means comprise a permanent magnet mobile with one of these two bodies, and a Hall effect sensor mobile with the other of the two bodies; the two bodies being coupled in a sliding manner, and the elastic means comprising a flat disc spring positioned perpendicular to this force; the spring comprising a peripheral portion coupled to one of the two bodies and a central portion coupled to the other of the two bodies.

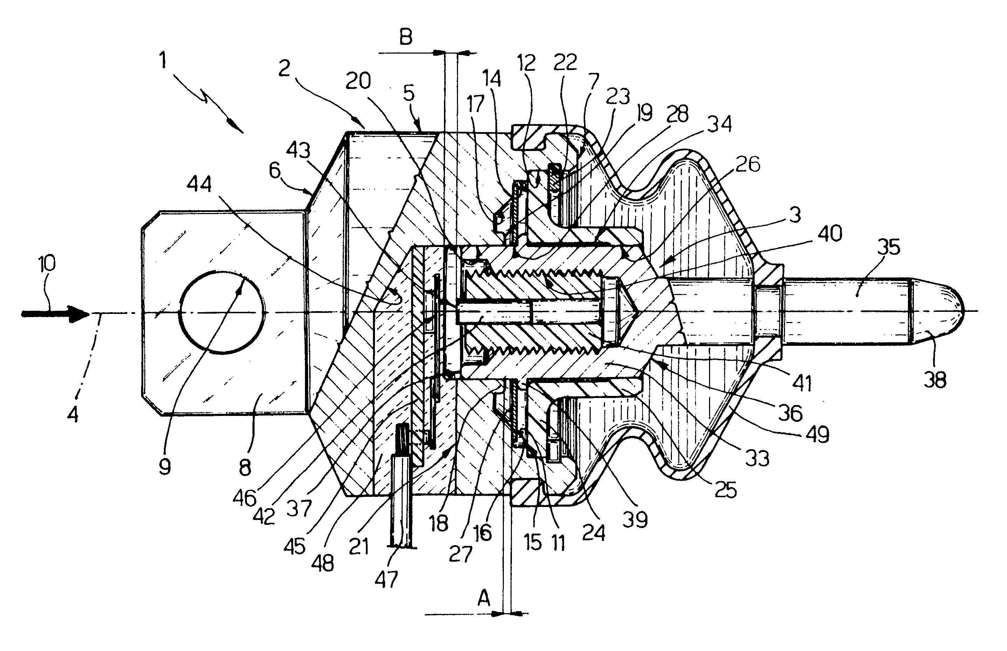

The invention will now be described with reference to the attached drawing which shows a lateral elevation, in partial section, of a preferred non-limiting embodiment thereof.

In the attached drawing, a dynamometer is designated overall by 1; this dynamometer comprises a first cylindrical body 2 and a second cylindrical body 3 which are coaxial with one another along a longitudinal axis 4 and which are telescopically connected so that they can move one another in the direction of the axis 4.

The body 2 has a cylindrical side surface 5 coaxial with the axis 4 and bounded on one side by an end surface 6 and on the other side by an end surface 7 opposite to the surface 6, facing the body 3 and perpendicular to the axis 4. A projection 8 projects axially and outwardly from the surface 6, this projection having a transverse through bore 9 adapted to allow the connection of the body 2 to a device (not shown) for the transmission to the body 2 of a force 10 to be measured oriented along the axis 4.

The surface 7 of the body 2 has a cavity 11 which comprises a blind hole 12 provided through the surface 7 and coaxial with the axis 4. The cavity 11 also comprises a further hole 14 coaxial with the hole 12 and having a diameter lower than that of the hole 12. The hole 14 is obtained through a base surface of the hole 12 so as to define an annular shoulder 15 and has a base surface 16 through which there is provided a further blind frustoconical hole 17 whose major side, coaxial to the hole 14 and lying on the surface 16 has a diameter smaller than that of the hole 14.

A cylindrical projection 18 coaxial with the axis 4 whose length is shorter than the depth of the hole 17 projects axially from a base surface of the hole 17 towards the surface 7. A circular free end surface 19 of the projection 18 is provided, via the body 2, with a blind axial bore 20, an inner end of which communicates with atmosphere via a radial hole 21 provided in the body 2 through the surface 5.

The surface of the hole 12 is provided with an annular groove 22, within which is housed an elastic ring 23 for locking, in contact with the shoulder 15, the outer periphery of an annular flange 24 of a cylindrical sleeve 25 which has an axial hole 26 coaxial with the hole 20 and having a diameter substantially equivalent to that of the hole 20, so as to centre the body 3.

The flange 24 defines, with the holes 14 and 17, a chamber within which is housed a flat disc spring 27 of annular shape, which has a peripheral annular zone in contact with the surface 16 and a central through bore 28 coaxial with the holes 26 and 20 and having a diameter which is advantageously slightly greater than that of the holes 26 and 20.

The body 3 comprises a cylindrical body 33 which has a cylindrical side surface 34 coupled in a sliding manner to the surface of the holes 26, 28 and 20. The body 3 also comprises a rod 35 which is disposed coaxially with the axis 4 and extends outside the body 33 from an end surface 36 of the body 33 opposite to an end surface 37 of the body 33 facing the hole 20. At its own free end the rod 35 is provided with a support cap 38.

The cylindrical side surface 34 is provided with an intermediate annular projection 39 which is housed in the chamber formed by the holes 17 and 14 in the space between the flange 24 of the sleeve 25 and an inner peripheral portion of the surface of the spring 27 facing the flange 24. In this way the annular projection 39, since it is clamped between the spring 27 and the flange 24, holds, at rest, the inner periphery of the spring 27 at a predetermined distance A from the surface 19 of the projection 18 and presses on the spring 27 thereby providing an elastic coupling between the bodies 2 and 3 in the direction of the axis 4.

The plane surface 37 is provided with a blind hole 40 coaxial with the axis 4, which hole has an inner thread coupled to the outer thread of a cylindrical core 41 of non-magnetic material which is also coaxial with the axis 4. The core 41 supports in its interior a permanent magnet 42 of cylindrical shape which is coaxial with the axis 4 and provided with a polar enlargement 43.

A printed circuit 45 which is disposed perpendicular to the axis 4 and supports a Hall effect sensor 46 is located within a cavity 44 formed by the radial hole 20 and the radial hole 21. The position of the circuit 45 within the cavity 44 is such that the sensor 46 is disposed, at rest, at a distance B from the polar enlargement 43 of the magnet 42 which is always greater than the distance A. The distance B can also be adjusted by screwing the cylindrical core 41 within the hole 40. Output cables 47 which emerge from the dynamometer 1 via the hole 21 are connected to the circuit 45. The cavity 44 which contains the printed circuit 45 is filled with plastic material 48 which ensures the stable mechanical fastening of the sensor 46 to the body 2 and an appropriate electrical insulation of the circuit 45.

A protection member 49 in the form of a tubular bellows is connected at one end to the rod 35 and at the other end to the body 2.

In use the cap 38 bears on a feedback surface (not shown) and the body 2 is connected to an actuator (not shown), advantageously an actuator of a servo-controlled system, via the through bore 9. The actuator applies an unknown force 10 to the dynamometer 1, which force is oriented along the axis 4, and is transmitted, via the elastic coupling formed by the spring 27, to the body 3 which reacts with a force equal and opposite to the force 10. The force applied thus causes an axial deformation of the spring 27 which is deflected towards the hole 20 allowing the body 33 to slide with respect to the body 2 and the distance B to be reduced by an amount proportional to the value of the force 10 applied.

By decreasing the distance B, the intensity of the magnetic field incident on the sensor 46 increases, producing a voltage variation proportional to the variation of this intensity and thus of the distance B and, consequently, directly proportional to the force 10 applied.

So that the polar enlargement 43 does not come into contact with the sensor 46 and damage it irreparably, a minimum safety distance below which B cannot drop is established. The value of this minimum safety distance is equal to the value of B less the value of A, where A is the maximum axial deformation which the spring 27 can undergo before being locked by the cylindrical projection 18. As the attached Figure clearly shows, B is greater than A and, consequently, even in the presence of forces 10 which are substantially greater than normal, the contact of the magnet 42 with the sensor 46 is always prevented. The dynamometer thus protects itself mechanically from overloads.

The dynamometer 1 is, as a result of its compact structure and fluid-proof nature, particularly suitable for operation in the presence of polluting agents and vibrations.

## Claims

1. A dynamometer, particularly for detecting the operating load of servo-controlled systems, comprising a first body (3) adapted to be connected to a feedback point, a second body (2) adapted to receive a force (10) to be measured, elastic means (27) interposed between the first and the second body (3, 2), wherein the first and second bodies (3, 2) are coupled together so as to displace one another in the direction of the force (10) and, under the action of this force, against the action of the elastic means (27), and indicator means (42, 46) adapted to transmit a signal as a function of the relative position of the two bodies (3, 2), characterized in that the indicator means (42, 46) comprise a permanent magnet (42) mobile with one (3) of these two bodies (3, 2), and a Hall effect sensor (46) mobile with the other (2) of the two bodies (3, 2), in that the two bodies (3, 2) are coupled in a sliding manner, and the elastic means (27) comprise a flat disc spring (27) positioned perpendicular to this force (10) and in that the spring (27) comprises a peripheral portion coupled to one (2) of the bodies (3, 2) and a central portion coupled to the other (3) of the two bodies (3, 2).

2. A dynamometer as claimed in claim 1, characterized in that the one (2) of the two bodies which is coupled to the outer peripheral portion of the spring (27) comprises limiting means (18) for limiting a relative stroke of the other body (3) against the thrust of the spring (27) to a first distance determined from a rest position and in that the permanent magnet (42) and the sensor (46) are disposed, in a rest position, at a second distance from one another which is greater than the first distance.

3. A dynamometer as claimed in claim 1 or 2, characterized in that the magnet (42) is borne by the first body (3) and the sensor (46) is borne by the second body (2).

4. A dynamometer as claimed in claim 3, characterized in that the second body (2) has a first cavity (44) housing the sensor (46) and in that the second body (2) engages the first cavity in a sliding manner.

5. A dynamometer as claimed in claim 4, characterized in that the first body (3) has a second cavity (40) communicating with the first cavity (44) and in that the magnet (42) is housed in this second cavity (40).

6. A dynamometer as claimed in claim 5, characterized in that it comprises support means (41) for the magnet (42) housed in the second cavity (40) and in that these support means (41) are coupled to the first body (3) in an adjustable manner in the direction of the force (10) and from and towards the sensor (46).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-1 005 288 (DAIMLER-BENZ) <br> * Claims 1-2; figure 2 * <br> --- | 1 | G 01 L  1/00 |
| A | EP-A-0 318 290 (GENERAL ELECTRIC) <br> * Claims 4-5 * <br> ----- | 1 | |

TECHNICAL FIELDS
SEARCHED (Int. Cl.5)

G 01 L

The present search report has been drawn up for all claims

| Place of search | Date of completion of the search | Examiner |
|---|---|---|
| THE HAGUE | 08-08-1990 | ZAFIROPOULOS N. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P0401)